# EUROPEAN PATENT APPLICATION

(11) **EP 4 303 292 A1**
(43) Date of publication of application: **10.01.2024**
(21) Application number: 23183034.0
(22) Date of filing: 03.07.2023
(51) Int. Cl.: C12G 1/02, C12H 1/22

(54) **MULTIPLE-CELL TANK FOR USE IN WINEMAKING**

(30) Priority: 05.07.2022 IT 202200014164
(71) Applicant: Defranceschi S.r.l., 40026 Imola (BO) (IT)
(72) Inventor: GUILLEMAIN, Laurent Jean Paul, 48123 RAVENNA (IT)
(74) Representative: Modiano, Micaela Nadia

(57) **Abstract**

A multiple-cell tank for use in winemaking (1), comprising a supporting frame (2) for a tank body (3) made of metallic material which comprises a bottom wall (4), a top wall (5) and a lateral shell (6), at least one separation partition (10) extending between the bottom wall (4) and the top wall (5) in order to define, in cooperation with the lateral shell (6), at least two containment cells (11, 12) which are mutually separated hermetically, at the lateral shell (6) there being at least one first and at least one second access hatch (11a, 112a) which lead into a respective containment cell (11, 12) and at the top wall (5) there being furthermore at least one first and at least one second evacuation stack (11b, 12b) in communication with a respective containment cell (11, 12), the separation partition (10) extending on a substantially vertical plane and comprising a first and a second vertical wall (21, 22) which are mutually spaced apart in order to define a separation gap (23).

The multiple-cell tank (1) further comprises a stiffening and supporting structure (40) for the first and the second vertical wall (21, 22), which comprises at least one supporting post (41) which extends along a direction of longitudinal extension (100) that is substantially vertical and defines at least one substantially flat mating portion (41a) which is designed to arrange itself so as to substantially face a portion of a respective lateral wall (21, 22), the stiffening and supporting structure (40) further comprising at least two lateral brackets (42) which extend along a substantially vertical direction and are stably connected to the internal surface of the lateral shell (6), the first and the second vertical wall (21, 22) being stably connected to the lateral brackets (42) and to the mating portion (41), there furthermore being at least one interconnection crossmember (43) between each lateral bracket (42) and the mating portion (41a), the (or each) interconnection crossmember (43) extending along a transverse direction (101) that is substantially perpendicular to the direction of longitudinal extension (100) and having at least one abutment portion arranged mated with the respective vertical wall (21, 22).

## Description

The present invention relates to a multiple-cell tank for use in winemaking.

Multiple-cell tanks are known and widely used, especially for white and rosé winemaking and storage, such tanks being used when there are space problems in a cellar and/or when it is necessary to have a large number of reduced-capacity chambers available for winemaking and/or for storage.

The conventional multiple-cell tanks used nowadays have a supporting frame for a vertically-extending cylindrical container defined by a bottom wall, by a top wall and by a cylindrical lateral shell.

Along the extension of the vertical cylindrical shell, one or more horizontally-extending partitions, which are adapted to define multiple cells for winemaking and/or storage, are arranged inside the container, arranged one above the other.

With reference to this type of multiple-cell tank, the lower discharge hatches are arranged at different heights along the extension of the cylindrical shell, while the evacuation stacks of the lower cells are connected to an evacuation port defined on the cylindrical shell, just below intermediate horizontally-extending partitions.

The solutions used nowadays have a number of drawbacks.

Firstly, the fact that the discharge hatches are arranged at heights that do not permit direct access from the floor determines the need to use ladders or walkways which, in addition to being particularly inconvenient to use, have undesired encumbrances, in addition to having an impact on appearance that often clashes with the design ethos of the wine cellar overall.

The presence of stacks that protrude laterally to the cylindrical shell also impacts on the clean appearance and on the optimization of spaces.

In order to try to overcome such drawbacks, this same Applicant has filed the European patent application no. 20217616.0 relating to a multiple-cell tank for use in winemaking, which comprises a supporting frame for a tank body. The tank body comprises a bottom wall, a top wall and a lateral shell.

In particular, at least two containment cells are defined inside the tank body and are mutually separated hermetically by at least one separation partition which extends, vertically, between the bottom wall and the top wall.

Although this embodiment is certainly valid from the conceptual point of view, it presents some problems in implementation, since it is necessary to provide a separation partition that is substantially flat but is connected with the curved surface of the lateral shell.

Since the cells have to contain a liquid, this shape structure presents some structural problems.

In fact, the internal pressure results in the structure being stressed at the separation partition, internal pressure which is extremely complex to manage, with the risk of needing to excessively stiffen the supporting structure of the partition with consequent reduction of the capacity of the individual tanks.

The aim of the present invention is to provide a multiple-cell tank for use in winemaking which is capable of improving the known art in one or more of the above-mentioned aspects.

Within this aim, an object of the invention is to make available a multiple-cell tank for use in winemaking that is highly reliable, easy to implement and of low cost.

This aim and these and other objects which will become better apparent hereinafter are achieved by a multiple-cell tank for use in winemaking according to claim 1, optionally provided with one or more of the characteristics of the dependent claims.

Further characteristics and advantages of the present invention will become better apparent from the detailed description that follows of a preferred, but not exclusive, embodiment of the multiple-cell tank for use in winemaking according to the invention, which is illustrated by way of nonlimiting example in the accompanying drawings wherein:

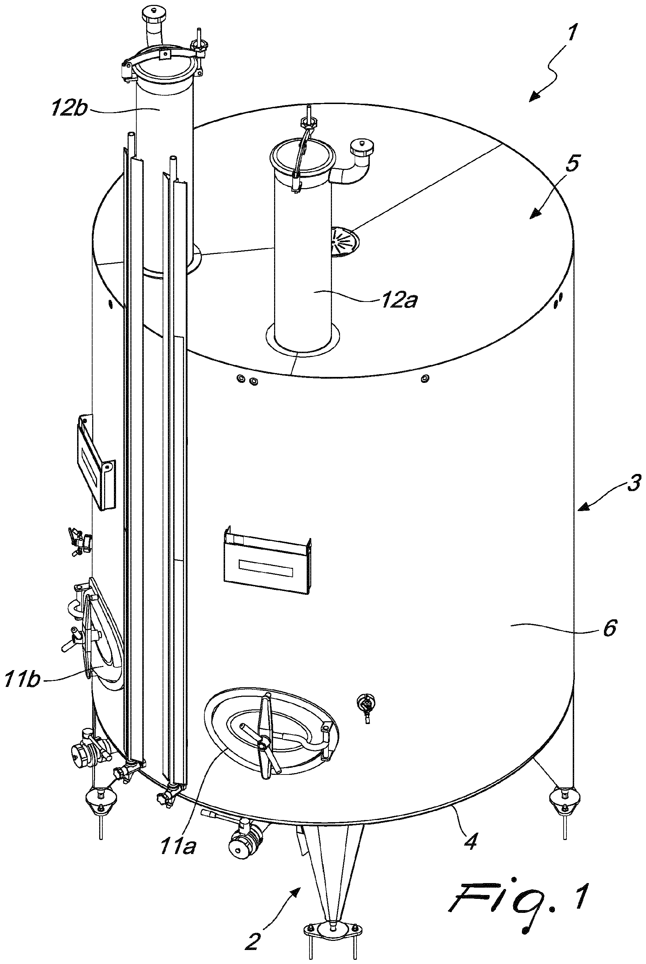

Figure 1 is a perspective view of a multiple-cell tank according to the invention;

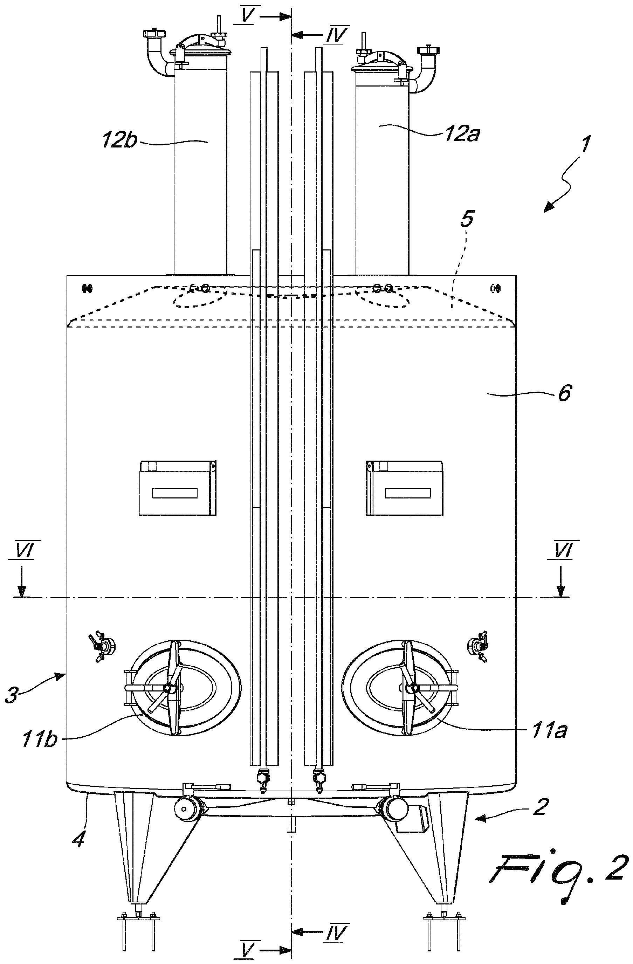

Figure 2 is a front elevation view of the multiple-cell tank;

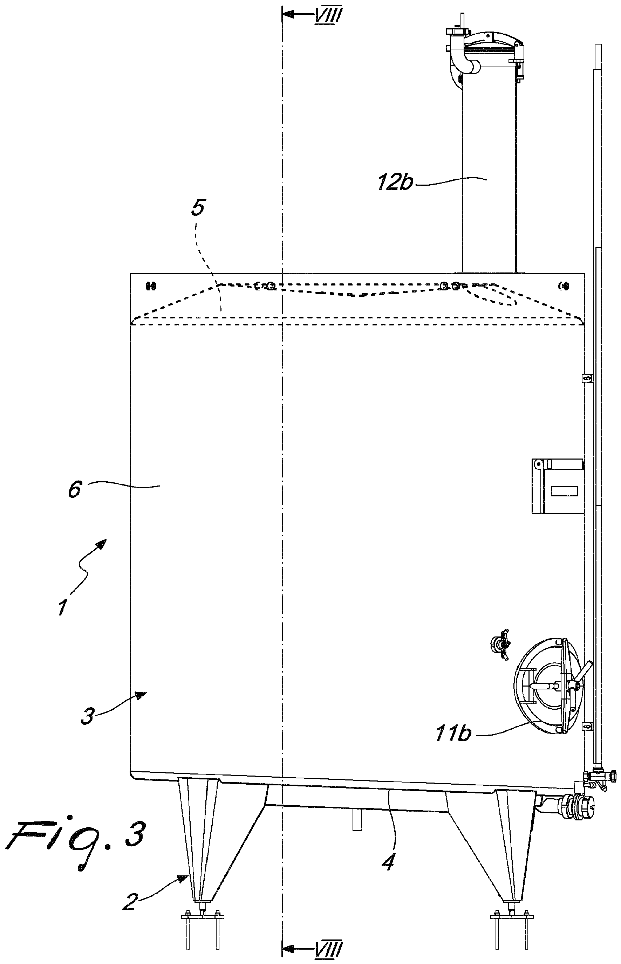

Figure 3 is a side view of the multiple-cell tank;

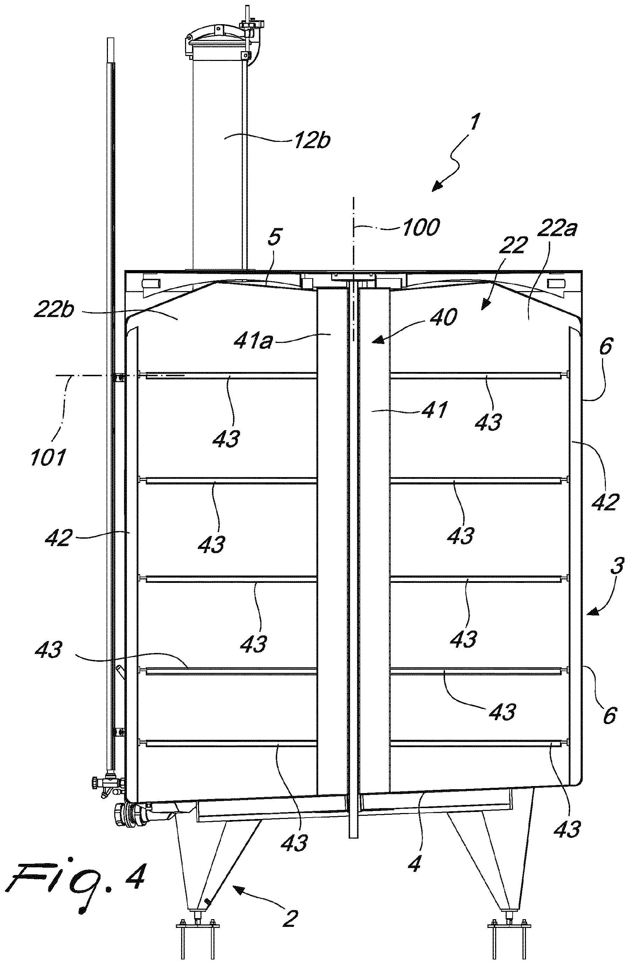

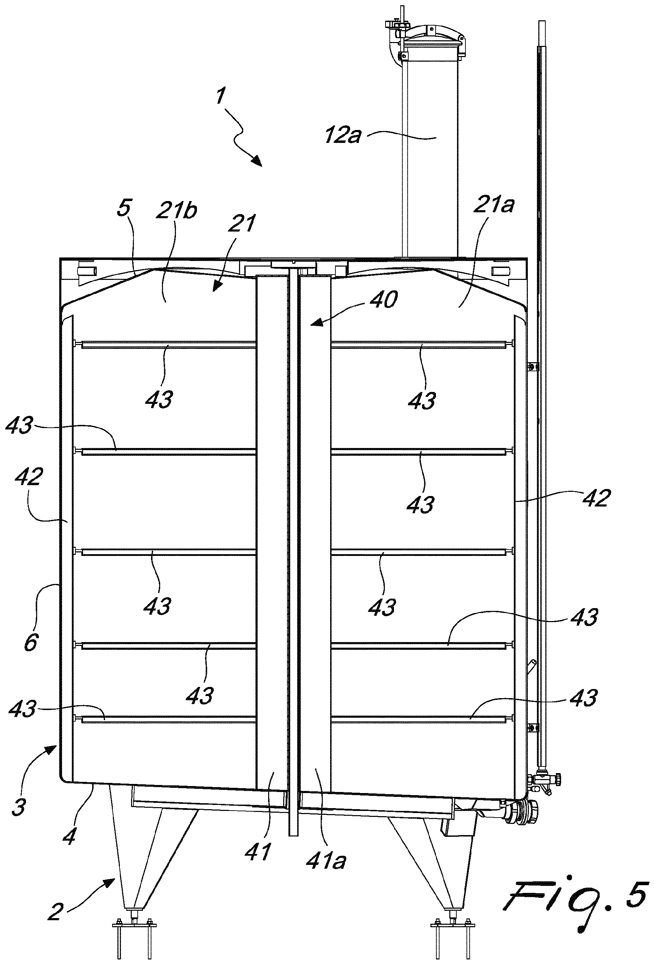

Figures 4 and 5 are two cross-sectional views of the multiple-cell tank taken along the plane of arrangement identified, respectively, by the lines IV-IV and V-V of Figure 2;

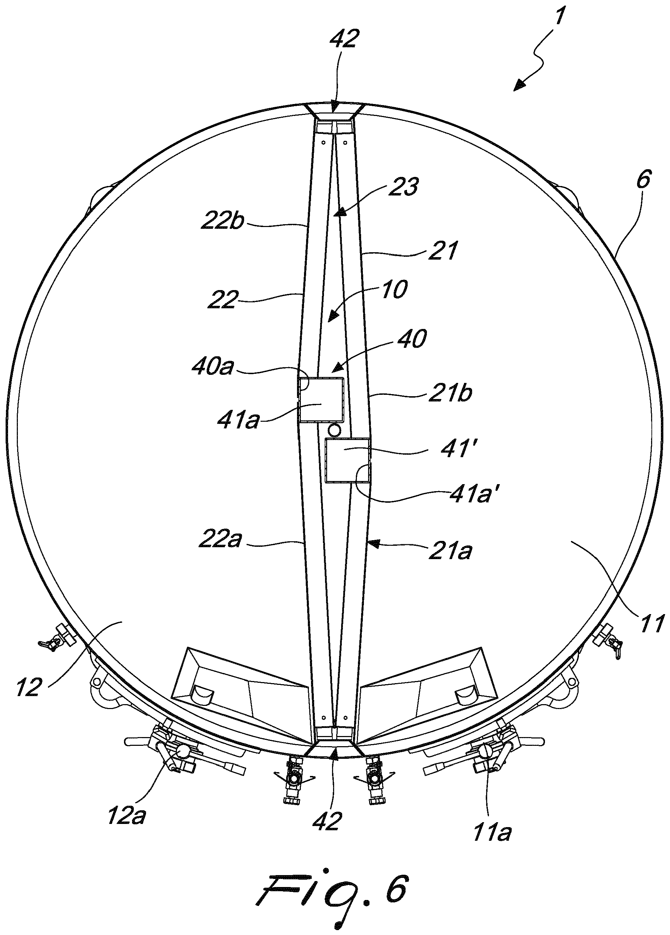

Figure 6 is a cross-sectional view of the multiple-cell tank taken along the plane of arrangement identified by the line VI-VI of Figure 2;

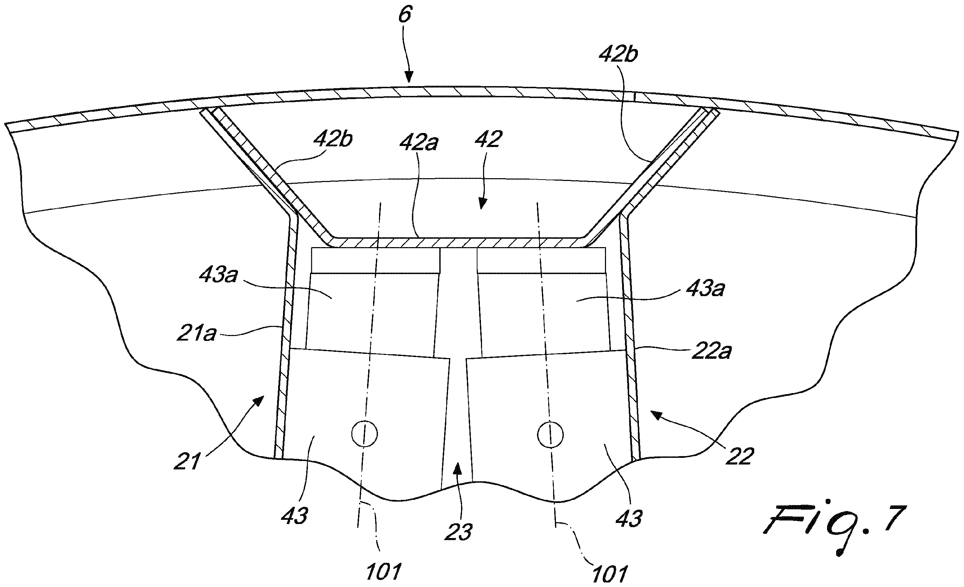

Figure 7 is an enlarged-scale view of a portion of the cross-section shown in Figure 6;

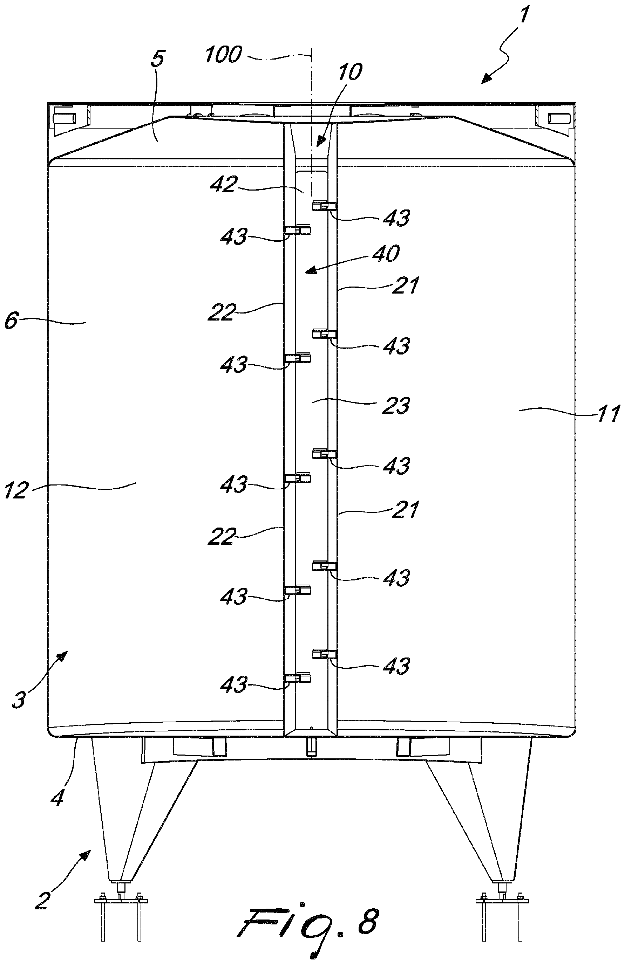

Figure 8 is a cross-sectional view of the multiple-cell tank taken along the plane of arrangement identified by the line VIII-VIII of Figure 3;

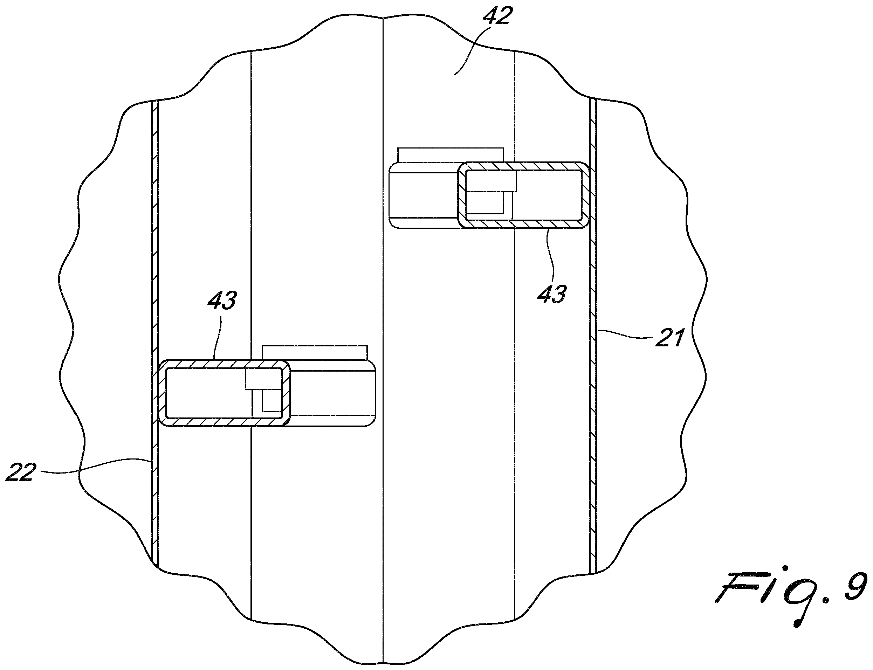

Figure 9 is an enlarged-scale view of a portion of the cross-section shown in Figure 8.

With reference to the figures, a multiple-cell tank for use in winemaking according to the invention, generally designated by the reference numeral 1, comprises a supporting frame 2 for a tank body 3 which is made of metallic material and comprises a bottom wall 4, a top wall 5 and a lateral shell 6.

At least one separation partition 10 extends between the bottom wall 4 and the top wall 5 so as to define, in cooperation with the lateral shell 6, at least two containment cells 11, 12 which are mutually separated hermetically.

At the lateral shell 6 there is at least one first and at least one second access hatch 11a, 112a, which lead into a respective containment cell 11, 12, and at the top wall 5 there is furthermore at least one first and at least one second evacuation stack 11b, 12b in communication with a respective containment cell 11, 12.

The separation partition 10 extends on a substantially vertical plane and comprises a first and a second vertical wall 21, 22, which are mutually spaced apart so as to define a separation gap 23.

According to the present invention, the multiple-cell tank 1 comprises a stiffening and supporting structure 40 of the first and of the second vertical wall 21, 22.

The stiffening and supporting structure 40 comprises at least one supporting post 41 which extends along a substantially vertical direction of longitudinal extension 100 and defines at least one substantially flat mating portion 41a which is designed to be arranged substantially so as to face a portion of a respective lateral wall 21, 22.

The stiffening and supporting structure 40 further comprises at least two lateral brackets 42 which extend along a substantially vertical direction and are stably connected to the internal surface of the lateral shell 6, for example by way of welding.

The lateral brackets 42 can comprise a central flat body 42a and two lateral wings 42b.

The lateral wings 42b can be stably fixed to the internal surface of the lateral shell and can define zones for fixing the vertical walls 21, 22.

The first and the second vertical wall 21, 22 are stably connected to the lateral brackets 42 and to the mating portion 41.

The stiffening and supporting structure 40 is further provided with at least one interconnection crossmember 43 between each lateral bracket 42 and the mating portion 41a.

In particular, the at least one interconnection crossmember 43 extends along a transverse direction 101 that is substantially perpendicular to the direction of longitudinal extension 100 and has at least one abutment portion arranged mated with the respective vertical wall 21, 22.

According to a preferred embodiment, shown in the figures, the stiffening and supporting structure 40 comprises a first and a second supporting post 41, 41' which define a respective mating portion 41a, 41a' which is designed to be arranged so as to substantially face a portion of a respective lateral wall 21, 22.

Preferably, the stiffening and supporting structure 40 is arranged inside the separation gap 23.

The supporting posts 41, 41' are substantially arranged at an intermediate zone between the lateral brackets 42.

Preferably, the (or each) supporting post 41 is substantially polygonal in transverse cross-section, and is advantageously internally hollow so as to reduce the overall weight.

By way of example, the supporting post 41 is rectangular or square in cross-section.

According to a preferred embodiment, the stiffening and supporting structure 40 comprises a plurality of interconnection crossmembers 43 which extend between each lateral bracket 42 and the mating portion 41a, 41a' and are substantially parallel to each other and mutually spaced apart along the direction of longitudinal extension 100.

With reference to the embodiment shown in the figures, the first and the second lateral wall 21, 22 comprise a first wall portion 21a, 22a and a second wall portion 21b, 22b which are arranged on incident planes.

The first wall portion 21a, 22a is connected to a first lateral bracket 42 and to the mating portion 41a, 41a, while the second wall portion 21b, 22b is in turn connected to the mating portion 41a, 41a' and to the other lateral bracket 42.

In particular, the respective mutually-facing wall portions 21a, 22a; 21b, 22b are arranged on planes that diverge from the lateral brackets 42 towards the mating portion 41a, 41a'.

This makes it possible to further reduce the volume of the separation gap 23, so as to maximize the capacity of the containment cells 11, 12 for the same size of the containment body 3.

Conveniently, the interconnection crossmembers 43 are connected, at the respective abutment portion, to the respective lateral walls 21, 22 by way of respective welds.

Also in order to reduce the size of the separation gap 23, it is possible for the interconnection crossmembers 43 associated with the first lateral wall 21 to be arranged offset along the direction of longitudinal extension 100, with respect to the interconnection crossmembers 43 associated with the second lateral wall 22.

Specifically, the stiffening and supporting structure 40 is shaped so as to arrange, as far as possible, the first lateral wall 21 and the second lateral wall 22 mutually mated, while still ensuring that any deformations caused by the hydrostatic thrust of the liquid stored in one of the containment cells 11, 12 cannot perturb or deform the lateral wall of the adjacent containment cell.

The use of the multiple-cell tank 1 according to the invention is substantially similar to that of a conventional tank.

All the discharge hatches 11a, 11b are accessible from floor level without the need for ladders or walkways.

Even the evacuation stacks, being arranged at the top wall, are without hindrance, either from the point of view of space occupation or of the impact on appearance.

Furthermore, the particular structure of the separation partition 10, and specifically, of the stiffening and supporting structure 40, makes it possible to have a structure that is extremely secure and capable of containing the liquid, without penalizing the total capacity.

In practice it has been found that the invention fully achieves the intended aim and objects.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102022000014164 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A multiple-cell tank for use in winemaking (1), comprising a supporting frame (2) for a tank body (3) made of metallic material which comprises a bottom wall (4), a top wall (5) and a lateral shell (6), at least one separation partition (10) extending between the bottom wall (4) and the top wall (5) in order to define, in cooperation with said lateral shell (6), at least two containment cells (11, 12) which are mutually separated hermetically, at said lateral shell (6) there being at least one first and at least one second access hatch (11a, 112a) which lead into a respective containment cell (11, 12) and at said top wall (5) there being furthermore at least one first and at least one second evacuation stack (11b, 12b) in communication with a respective containment cell (11, 12), said separation partition (10) extending on a substantially vertical plane and comprising a first and a second vertical wall (21, 22) which are mutually spaced apart in order to define a separation gap (23), **characterized in that** it comprises a stiffening and supporting structure (40) for said first and said second vertical wall (21, 22), said stiffening and supporting structure (40) comprising at least one supporting post (41) which extends along a direction of longitudinal extension (100) that is substantially vertical and defines at least one substantially flat mating portion (41a) which is designed to be arranged so as to substantially face a portion of a respective lateral wall (21, 22), said stiffening and supporting structure (40) further comprising at least two lateral brackets (42) which extend along a substantially vertical direction and are stably connected to the internal surface of said lateral shell (6), said first and said second vertical wall (21, 22) being stably connected to said lateral brackets (42) and to said mating portion (41), there furthermore being at least one interconnection crossmember (43) between each lateral bracket (42) and said mating portion (41a), said interconnection crossmember (43) extending along a transverse direction (101) that is substantially perpendicular to said direction of longitudinal extension (100) and having at least one abutment portion arranged mated with the respective vertical wall (21, 22).

2. The tank (1) according to claim 1, **characterized in that** said stiffening and supporting structure (40) comprises a first and a second said supporting post (41, 41') which define a respective mating portion (41a, 41a') which is designed to be arranged so as to substantially face a portion of a respective lateral wall (21, 22).

3. The tank (1) according to claim 1, **characterized in that** said at least one supporting post (41) is substantially polygonal in transverse cross-section.

4. The tank (1) according to one or more of the preceding claims, **characterized in that** said stiffening and supporting structure (40) comprises a plurality of interconnection crossmembers (43) between each lateral bracket (42) and said mating portion (41a, 41a') which are substantially parallel to each other and are mutually spaced apart along said direction of longitudinal extension (100).

5. The tank (1) according to one or more of the preceding claims, **characterized in that** said first and said second lateral wall (21, 22) comprise a first wall portion (21a, 22a) and a second wall portion (21b, 22b) which are arranged on incident planes, said first wall portion (21a) being connected to a first lateral bracket (42) and to said mating portion (41a, 41a'), and said second wall portion (21b) being connected to said mating portion (41a, 41a') and to the other lateral bracket (42).

6. The tank according (1) according to one or more of the preceding claims, **characterized in that** the respective mutually-facing wall portions (21a, 22a; 21b, 22b) are arranged on planes that diverge from the lateral brackets (42) towards the mating portion (41a, 41a').

7. The tank (1) according to one or more of the preceding claims, **characterized in that** said interconnection crossmembers (43) are connected, at the respective abutment portion, to said lateral walls (21, 22) by way of respective welds.

8. The tank (1) according to one or more of the preceding claims, **characterized in that** the interconnection crossmembers (43) associated with said first lateral wall (21) are arranged offset along said direction of longitudinal extension (100) with respect to the interconnection crossmembers (43) associated with the second lateral wall (22).

9. The tank (1) according to one or more of the preceding claims, **characterized in that** said stiffening and supporting structure (40) is shaped so as to arrange said first lateral wall (21) and said second lateral wall (22) mutually mated in order to ensure that any deformations caused by the hydrostatic thrust of the liquid stored in the respective containment cell (11, 12) cannot perturb or deform the adjacent lateral wall.
